# EUROPEAN PATENT APPLICATION

(11) **EP 2 887 511 A1**
(43) Date of publication of application: **24.06.2015**
(21) Application number: 13006036.1
(22) Date of filing: 20.12.2013
(51) Int. Cl.: H02K 11/00

(54) **Sensor assembly for measuring at least a temperature on a moving part of an electric machine**

(71) Applicant: ABB Technology AG, 8050 Zürich (CH)
(72) Inventor: Kai, König, 69190 Walldorf (DE); Ulrich, Marco, 67259 Großniedesheim (DE); Ulf, Ahrend, 76135 Karlsruhe (DE)
(74) Representative: Marks, Frank

(57) **Abstract**

Sensor assembly for measuring a temperature on a moving part (1) of an electric machine, comprising:
- an active wireless sensor unit (9) for transforming the temperature value measured on the moving part (1) into an electric signal which is transmitted to an electronic control unit arranged outside the moving part (1),
- electrical energy source means for supplying the active wireless sensor unit (9) with electrical energy, wherein the electrical energy source means comprises a thermoelectric generator (6), which transforms the locally available thermal energy on the moving part (1) into electrical energy for supplying the active wireless sensor unit (9).

## Description

### Field of the invention

The invention relates to a sensor assembly for measuring at least a temperature on a moving part of an electric machine, comprising an active wireless sensor unit for transforming the temperature value measured on the moving part into an electric signal which is transmitted to an electronic control unit arranged outside the moving part, and electrical energy source means for supplying the active wireless sensor unit with electrical energy.

### Background of the invention

The invention is especially intended for temperature measurement applications on moving parts such as a runner of a generator or electromotor. Transfer of energy to and data from the moving part to the static part of the electric machine is problematic, since brushes or similar contact-based means of power transfer are undesirable due to wear. While a number of established radio protocols such as WirelessHART or ZigBee exist for wireless data transfer in industrial applications, current power supply solutions are not ideal.

The document DE 197 07 860 A1 discloses a technical solution for a wireless data transfer. Both tapping the currents in the windings of the electric machine by contacting the coil wires and drawing power from the electromagnetic fields by auxiliary pick up coils are proposed, but such solutions are difficult to fit or retrofit and may distort the electromagnetic fields. Low power sensors and electronics for industrial sensors require few mW of power or only a few µW if low-power radio protocols are used and resolution is sacrificed. Nevertheless, the use of batteries is not favorable as temperature range and life cycle of current batteries are hard to bring in agreement with industrial specifications and a maintenance-free device life of more than 10 years.

The EP 1 798 866 A1 discloses a passive sensor, such as a temperature sensor based on surface acoustic waves which are an alternative for performing measurements on moving parts of an electric machine. As they are completely analog and passive devices, however, they have to drawbacks of limited range, an analog output signal being transmitted, and a limited number of sensors that can be realized within license-free frequency bands.

In contrast, it is an object of the present invention to provide an active sensor assembly for measuring temperature and/or another value on a moving part of an electric machine, using simple and secure autonomous energy supply and wireless data transfer means. This means may also be less dependent on the load of the motor than an electric or electromagnetic power supply from the rotor windings, as the time constants of the thermal processes are longer than the time constants of the load profile in some cases.

This objective is solved by a sensor assembly as mentioned in Claim 1. In view of an electric machine including such a sensor assembly, Claim 6 solve the technical problem as described above.

### Summary of the invention

According to the invention, the electrical energy source contains a thermoelectric generator, which transforms the locally available thermal energy on the moving part into electrical energy for supplying the active wireless sensor unit.

With other words, the invention uses thermal energy harvesting to provide microelectronics-based low-power sensor assemblies with greater amounts of energy than those that can be reasonably transmitted by radio waves. Generally, the invention proposes to use the heat generated in electric machines by the flow of currents in order to power wireless condition monitoring sensors, especially temperature sensors, inside the machine. In particular, in larger electromagnetic synchronous machines, the currents in the rotor coils as moving parts generate substantial amounts of waste heat due to the finite resistivity of the copper used by these coils, so that the temperature inside such a machine can easily exceed 80° Celsius.

According to a preferred embodiment of the invention the thermoelectric generator is based on the Seebeck effect for directly converting thermal gradients on the moving part into electric energy. The thermoelectric generator creates voltage when there is a different temperature on each side of the generator. At the atomic scale, an applied temperature gradient causes charge carriers in the material to diffuse from the hot side to the cold side of the generator. In order to provide an effective cool side of the thermoelectric generator, it is proposed to connect a thermal conductor to the outer surface of the thermoelectric generator housing. At the distal end of the said thermal conductor, a heat sink is connected in order to increase the temperature difference.

As the outside of the moving part of the electric machine is usually cooled by forced air flow due to the rotation, the highest temperature for measurement should be found on the lowest windings of the electric coil of the rotor. Even though the efficiency of the thermoelectric generator is limited by the second law of thermodynamics and usually in the range of a few percent, in large generators or electro motors, the electrical energy provided by such thermo electric generators is still abundant for low-power sensor units according to the present invention.

According to another aspect of the invention, it is recommended that the heat sink of the thermoelectric generator is also used as antenna for wireless transmitting the electrical sensor signals to the electronic control unit, which is arranged outside the moving part on a static machine chassis or the like.

According to a first preferred embodiment of the invention the thermal conductor runs through the electric coil arranged on the moving part in order to conduct the heat to the cool side of the thermoelectric generator which is arranged outside the electric coil. At the said cool side of the thermoelectric generator the heat sink can be mounted which is also used as an antenna as mentioned above.

According to a second preferred embodiment of the invention the thermal conductor is arranged between one front side of the electric coil and the adjacent armature section of the moving part. This special arrangement ensures that the wiring of the electric coil is not hindered by the thermal conductor means. The thermal conductor is preferably embedded in a corresponding channel in the said armature section of the moving part.

The foregoing and other aspects of the invention will become apparent following the detailed description of the invention when considered in conjunction with the enclosed drawings.

### Brief description of the drawings

- Figure 1: is a schematic side view to a sensor assembly for measuring a temperature on a rotor part of an electric motor according to a first embodiment, and
- Figure 2: is a schematic side view to a sensor assembly for measuring a temperature on a rotor part of an electric motor according to a second embodiment.

### Detailed description of the drawings

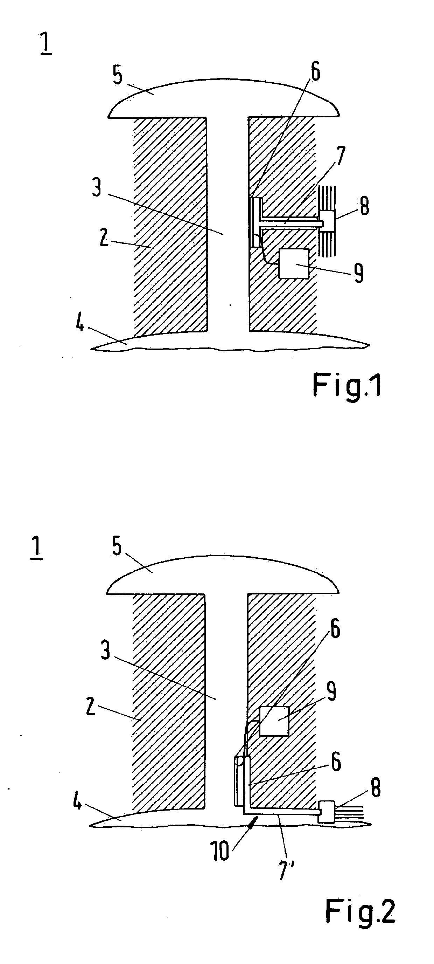

The sensor assembly as shown in Figure 1 is mounted on a moving part 1 of an electric motor. The moving part 1 is the rotor part of the electric motor; the stator part - which is already known according to the common knowledge - is not shown.

The moving part 1 comprises an electric coil 2 as well as a sensor assembly, which is partly arranged inside the wireing of the electric coil 2. The wires of the electric coil 2 are wound along the length of the armature 3 between an axle 4 and a pole cap 5. During operation, the current flowing through the electric coil 2 creates heat due to resistive losses, while the surface of the electric coil 2 is convectively cooled in the relative wind. Heat can be transported through the electric coil 2 by convecting and by thermal conduction through the wireing of the electric coil 2, yet the surface of the electrical coil 2 is expected to be significantly cooler than the center of the electric coil 2 next to the armature 3. The exact thermal gradient depends on the size of the electric machine and its efficiency, and the cooling of the air gap between the moving part 1 and - not shown - static part of the electric machine.

Inside the electric coil 2 a "hot" side of a thermoelectric generator 6 is attached to the armature 3 of the moving part 1. The other, "cool" side of the thermoelectric generator 6 is connected with low-thermal resistivity to the thermal conductor 7 in form of a metal bar, which serve to cool the side. The thermal conductor 7 is isolated around its diameter and connected to a heat sink 8 mounted at its distal end outside the electric coil 2. The heat sink 8 consists of several metal plates mounted in parallel to the windings of the electric coil 2 in order to optimize cooling by forced convection.

The thermoelectric generator 6 delivers electric energy to an active wireless sensor unit 9 using the Seebeck effect for directly converting thermal gradients between the foregoing mentioned hot side and the cool side of the thermoelectric generator 6.

The active wireless sensor unit 9 is connected to the thermoelectric generator 6 by a cable and detects the local temperature and other diagnostic data of the electric machine in order to send the sensor data to a reader which is also integrated into the sensor unit 9. The active wireless sensor unit 9 which is powered by the thermoelectric generator 6 uses the heat sink 8 as a PIFA-antenna for wireless communication with a - not shown - central electronic control unit, which is arranged outside the moving part 1.

According to Figure 2 a thermal conductor 7 is arranged between the front side of the electric coil 2 and the adjacent armature 4 of the moving part 1. The thermal conductor 7' is embedded in a corresponding channel 10 in the pole cap 5 of the moving part 1. This arrangement will reduce the amount of material in between the electric coil 2 to only the sensor unit 9 itself.

In certain electric machines, e.g. salient pole machines, cooling fins already present between the rotor poles could also be used. The effect of rotation in the heat conductive capabilities of heat pipes need also be considered due to the effects of inertia on condensed water. If this turns out problematic, an alternative, such as the use of solid heat conductors like metal bars may be required.

Furthermore, the antenna means as mentioned above which are used to send the sensor data to a reader can also be integrated into the sensor unit 9. Ideally, the electronics and antenna means should be placed outside of the air gap, where material disturbing the magnetic fluxes may decrease the efficiency of the electric machine.

### Reference signs

- 1: moving part
- 2: electric coil
- 3: armature
- 4: axle
- 5: pole cap
- 6: thermoelectric generator
- 7: thermal conductor
- 8: heat sink
- 9: sensor unit
- 10: channel

## Claims

1. Sensor assembly for measuring a temperature on a moving part (1) of an electric machine, comprising:
- an active wireless sensor unit (9) for transforming the temperature value measured on the moving part (1) into an electric signal which is transmitted to an electronic control unit arranged outside the moving part (1),
- electrical energy source means for supplying the active wireless sensor unit (9) with electrical energy,
**characterized in that,** the electrical energy source means comprises a thermoelectric generator (6), which transforms the locally available thermal energy on the moving part (1) into electrical energy for supplying the active wireless sensor unit (9).

2. Sensor assembly according to Claim 1,
**characterized in that,** the thermoelectric generator (6) based on the Seebeck effect for directly converting thermal gradients on the moving part (1) into electric energy.

3. Sensor assembly according to Claim 1,
**characterized in that,** a thermal conductor (7) is connected to the thermoelectric generator (6) in order to provide a cool side of the thermoelectric generator (6).

4. Sensor assembly according to Claim 1,
**characterized in that,** that the distal end of the thermal conductor (7) is connected to a heat sink (8) arranged in distance to the thermoelectric generator (6).

5. Sensor assembly according to Claim 4,
**characterized in that,** that the heat sink (8) is also used as antenna for wireless transmitting the electrical sensor signals to the electronic control unit.

6. Electric machine, especially an electric generator or an electric motor,
comprising a stator part and a rotor part as a moving part (1), on or in which a sensor assembly according to one of the preceding Claims is mounted.

7. Electric machine according to Claim 6,
**characterized in that,** the moving part (1) comprises an electric coil (2) and the sensor assembly is at least partly arrange inside the wiring of the electric coil (2).

8. Electric machine according to Claim 7,
**characterized in that,** that the thermal conductor (7) runs through the electric coil (2) in order to lead the heat to the cool side of the thermoelectric generator (6) which is arranged outside the electric coil (2).

9. Electric machine according to Claim 7,
**characterized in that,** the that the thermal conductor (7) is arranged between one front side of the electric coil (2) and the adjacent armature (4) or the pole cap (5) of the moving part (1).

10. Electric machine according to Claim 9,
**characterized in that,** the thermal conductor (7') is embedded in a corresponding channel (10) in the armature (4) or the pole cap (5) of the moving part (1).
